# EUROPEAN PATENT SPECIFICATION

(11) **EP 2 196 333 B1**
(45) Date of publication and mention of the grant of the patent: **14.01.2015**
(21) Application number: 09177572.6
(22) Date of filing: 01.12.2009
(51) Int. Cl.: B60C 15/00, B60C 17/00

(54) **Self-supporting pneumatic tire**
Selbsttragender Luftreifen
Pneu autoportant

(30) Priority: 12.12.2008 US 333437
(43) Date of publication of application: 16.06.2010
(73) Proprietor: The Goodyear Tire & Rubber Company, Akron, OH 44316-0001 (US)
(72) Inventor: Koeune, Thierry Paul-Marie Gabriel, B-6637, Fauvillers (BE); Deroo, Tony Raymond Gery, F-57330, Hettange Grande (FR)
(74) Representative: Kutsch, Bernd

(56) References cited:
- EP-A2- 1 186 450
- US-A- 5 639 320
- US-A1- 2005 236 085
- US-B1- 6 712 108

## Description

### Field of the Invention

The present invention is directed to a pneumatic radial tire capable of running in conditions wherein the tire is operated at less than conventional inflation pressure.

### Background of the Invention

Self-supporting run-flat tires have been commercialized for many years. The primary characteristic of such tires is an increase in the cross-sectional thickness of the sidewalls to strengthen the sidewalls. These tires, when operated in the uninflated condition, place the reinforcing sidewall inserts in compression. Due to the large amounts of rubber required to stiffen the sidewall members, heat build-up is a major factor in tire failure. This is especially true when the tire is operated for prolonged periods at high speeds in the uninflated condition.

US-A- 5,368,082 teaches the employment of special sidewall inserts to improve stiffness. Approximately six additional pounds of weight per tire are required to support an 181 kg load in an uninflated tire. The earliest commercial use of such runflat tires were used on a high performance vehicle and had a very low aspect ratio. The required supported weight for an uninflated luxury car tire, having an aspect ratios in the 55% to 65% range or greater, approximates 635 kg load. Such higher loads for larger run-flat tires meant that the sidewalls and overall tire had to be stiffened to the point of compromising ride. Luxury vehicle owners simply will not sacrifice ride quality for runflat capability. The engineering requirements have been to provide a runflat tire with no loss in ride or performance. In the very stiff suspension performance type vehicle the ability to provide such a tire was comparatively easy when compared to luxury sedans with a softer ride characteristic. Light truck and sport utility vehicles, although not as sensitive to ride performance, provide a runflat tire market that ranges from accepting a stiffer ride to demanding the softer luxury type ride.

It is thus desired to provide a novel run on flat tire design that is a "soft" run on flat design, so that no compromise in comfort is required while having the same chassis loading as a regular pneumatic tire.

US-A- 2005/0236085 describes a tire in accordance with the preamble of claim 1.

Further pneumatic tires comprising two inserts in the sidewall separated by a ply are described in US-A- 5,639,320, US-B1- 6,712,108 and EP-A- 1 186,450.

### Summary of the Invention

The invention is directed to a tire according to claim 1.

Dependent claims refer to preferred embodiments of the invention.

### Definitions

The following definitions are controlling for the disclosed invention.

"Apex" means an elastomeric filler located radially above the bead core and between the plies and the turnup ply.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Inner" means toward the inside of the tire and "outer" means toward its exterior.

"Radially" means lines or directions extending perpendicular to the axial direction.

"Self-supporting run-flat" means a type of tire that has a structure wherein the tire structure alone is sufficiently strong to support the vehicle load when the

tire is operated in the uninflated condition for limited periods of time and speed, the sidewall and internal surfaces of the tire not collapsing or buckling onto themselves, without requiring any internal devices to prevent the tire from collapsing.

"Sidewall insert" means elastomer and/or cord reinforcements located in the sidewall region of a tire; the insert being in addition to the carcass reinforcing ply and outer sidewall rubber that forms the outer surface of the tire.

"Spring Rate" means the stiffness of tire expressed as the slope of the load deflection curve at a given pressure.

"Vertical Deflection" means the amount that a tire deflects under load.

### Brief Description of the Drawings

The invention will be described by way of example and with reference to the accompanying drawings in which:

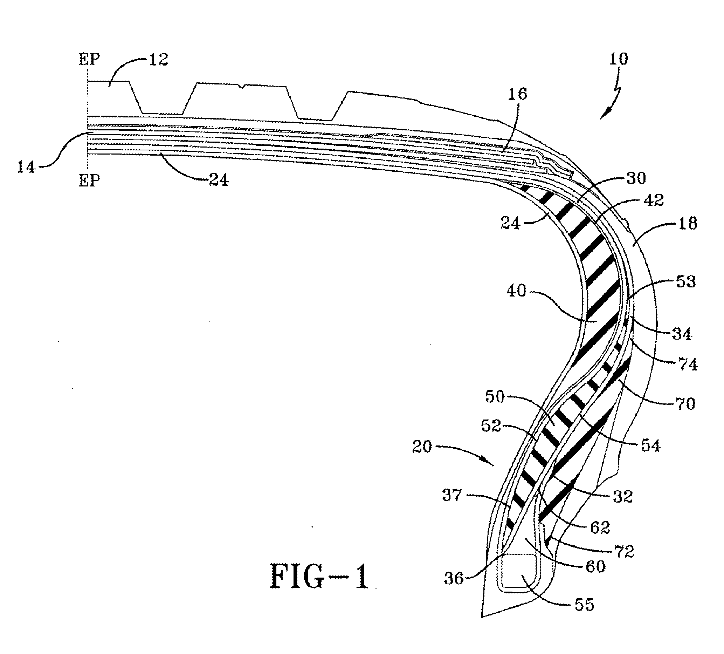

FIG. 1 is a cross-sectional configuration of one half of a self-supporting run-flat tire;

### Detailed Description of the Invention

Figure 1 illustrates a tire 10 as an embodiment of the present invention that is designed to be operable should a loss of air pressure occur. The tire 10 has a radially outer ground engaging tread 12, and an optionally belt structure 14 located in the crown portion of the tire underneath the tread. The belt structure 14 contains one or more belts with an optional shoulder overlay 16 to protect the belts at the shoulder portion of the crown. The tire 10 further comprises a pair of sidewall portions 18 which extend radially inwards from the tread and terminate in a bead region 20. Each bead region 20 further comprises a bead or bead wire 55 having any desired shape. The bead region 20 may further include an optional first apex 60 and an optional second apex 70 as described in more detail, below. The bead region 20 may also include other optional and non-illustrated elements such as flippers, chippers, toe guards and chafers.

The tire 10 further includes a carcass which includes an inner liner 24 which is air impervious, and extends from one bead region 20 to the other. The carcass also includes a first reinforcing ply 30 and may also include an optional second reinforcing ply 34. The first reinforcing ply 30 is the radially innermost ply and extends under the crown portion of the tire and axially outwards of a first insert 40 in the upper shoulder area of the tire. The first insert 40 is located in the upper shoulder area near the crown, and is located between the innerliner 24 and the first reinforcing ply 30. The first reinforcing ply 30 extends axially outward and adjacent the axially outer portion 42 of the first insert 40. The first reinforcing ply 30 preferably transitions from an axially outward position in the upper shoulder area of the tire to an axially inward position in the mid to lower portion of the sidewall 18. The first reinforcing ply 30 functions as a dividing line between the first insert 40 and a second insert 50. The first reinforcing ply 30 extends radially inward along the axially inward surface 52 of a second insert 50. The first and second insert are shaped and positioned to modify the first reinforcing plyline so that the first reinforcing ply is loaded in tension whether the tire is inflated or deflated. The tension loading is thus minimized in the inserts 40, 50, as the first reinforcing ply carries the load. Details of the first and second insert 40, 50 are described, below.

In the bead region of the tire, the first reinforcing ply 30 is located between a portion of the inner liner 24 and the second insert 50, and preferably extends axially inward of the second insert 50. The reinforcing ply is also axially inward of the bead wire 55 in the bead portion 20 of the tire. The first reinforcing ply 30 is anchored to the bead region 20 by any desired method known to those skilled in the art. One method of anchoring the first reinforcing ply 30 is to wrap the ply 30 around the bead and end in a turn up 32. Other methods to anchor the first reinforcing ply 30 to the bead include reverse turnup, locked bead construction, high ply ending or envelop turnup wherein the ending is located under belt edges. The turn up 32 preferably extends past the tip 62 of apex 60 and abuts a portion of a second reinforcing ply 34.

The second optional reinforcing ply 34 is located radially outward and adjacent the first ply underneath the crown portion of the tire and in the upper shoulder area. In the mid shoulder area, a radially outer portion 53 of a second insert 50 separates the first reinforcing ply 30 from the second reinforcing ply 34. The first reinforcing ply 30 extends along the axially inner edge 52 of the second insert 50 while the second reinforcing ply 34 extends along the axially outer edge 54 of the second insert 50. The second reinforcing ply 34 is preferably located between the second insert 50 and a second apex 70. The second reinforcing ply has a terminal end 36 that may terminate in the vicinity of bead wire 55. Preferably, the terminal end 36 is located axially outward of the down portion 37 of the first reinforcing ply 30 and radially outward of the bead wire 55. Preferably, the terminal end 36 is located between the apex 60 and the insert 50. The terminal end 36 of the second reinforcing ply does preferably not wrap around either bead 55 nor is it anchored to the bead 55, and is considered to be a floating ply because it is not anchored around each bead 55. Alternatively, the terminal end 36 may be anchored to the bead by wrapping around the bead or via a reverse turn-up.

The first bead apex 60 is located radially outward of the bead core 55 and between the lower end of the second reinforcing ply 34 and the turn-up portion 32 of the first reinforcing ply 30. The first bead apex 60 preferably has a triangular shape with a height that ranges from 0.3 to 3 times the bead height, and more preferably 1.5 to 2 times the bead height. The first apex 60 is preferably shaped and sized to keep tension in the ply turnup 32 for both the inflated and deflated tire conditions. The bead apex 60 is typically formed of an elastomer or rubber. The first bead apex 60 is optional, and may be replaced by a pentagonal bead (not shown).

As described above, the tire of this embodiment further includes a second, optional bead apex 70. The second optional bead apex 70 is located adjacent the second insert with the lower portion of the second ply located therebetween. The second apex 70 has a radially inner end 72 located near the radially outer portion of the bead wire 55, and a radially outer end 74 that extends in the range from 1/3 to 1/2 the height of the sidewall. The second bead apex 70 is typically formed of an elastomer or rubber having a Shore A hardness at 23 degrees C in the range of 60 to 85, more preferably 65 to 80. The second apex 70 is preferably shaped and sized to keep tension in the ply turnup 32 for both the inflated and deflated tire conditions.

The first insert 40 is curved and shaped so that the first ply 34 is kept under tension in both the inflated and the deflated conditions. The insert 40 preferably has a maximum thickness B at a location between the tread edge and the radial location of the upper sidewall of the tire. B ranges from 5 mm to 20 mm, preferably 8 to 15 mm, and occurs at a radial height of 55% to 75%, such as 60% to 70% or 2/3 of the section height as measured from radially inside to outside. The first insert 40 is typically formed preferably of an elastomer or rubber having a Shore A hardness at 23 degrees C in the range of 50 to 75, more preferably 55 to 65. The function of the insert 40 is preferably to stiffen/support the sidewall 18 of the tire 10 when the tire 10 is operated at reduced or insignificant inflation pressure, and to keep the ply under tension when the tire is at reduced or insignificant inflation pressure. If the ply is kept in tension, the tension load of the inserts 40, 50 are minimized.

The second insert 50 preferably has an asymmetrical shape. The radially outer end 53 of the second insert overlaps with the first insert 40. The curvature of the axially inner surface 54 of the second insert is concave at the radially outer portion and convex in the inner surface 56 of the radially inner portion. The second insert preferably has a different shore A hardness than the first insert 40, and it is preferred that the second insert be stiffer relative to the first insert. Thus, it is preferred that the second insert has a higher relative shore A hardness than the first insert 40.

The inserts 40, 50 are elastomeric in nature and may have material properties selected to enhance inflated ride performance while promoting the tire's run-flat durability. The inserts 40, 50 if desired, may also be individually reinforced with cords or short fibers.

The inserts 40, 50 and apexes 60, 70 may have a tangent delta in the range of 0.02 to 0.06, and more preferably in the range of 0.025 and 0.045. The tangent delta is measured under shear at 70 degrees C, and under a deformation of 6%, using a Metravib analyzer at a frequency of 7.8 Hertz.

## Claims

1. A pneumatic tire comprising a carcass, a tread (12), a belt reinforcing structure (14) located radially outward of the carcass and radially inward of the tread (12), a pair of sidewalls (18), each sidewall (18) located radially outward of one of a pair of bead regions (20), a first insert (40) and second insert (50), wherein the carcass further includes a first reinforcing ply (30) extending under the tread (12), wherein the first insert (40) is positioned between an inner liner (24) and the first reinforcing ply (30), and wherein the second insert (50) is positioned axially outward of the first reinforcing ply (30), **characterized in that** the first insert (40) has a first end located near the crown portion of the tire (10) and a second, radially innermost end located in the range of from 25% to 50% of the section height of the tire (10), and **in that** the second insert (50) has a radially outermost end located in a range of from 50% to 75% of the section height of the tire (10) and a second, radially innermost end terminating in abutting contact with the bead (55) or not more than 10 mm radially above the bead (55), wherein the section height is measured in the radial direction from the radially innermost point of the bead region (20) of the tire (10) to the radially outermost point of the tread (12) of the tire (10)

2. The tire of claim 1 wherein the first reinforcing ply (30) is anchored about a bead (55) in each respective bead region (20).

3. The tire of claim 1 or 2 wherein a second reinforcing ply (34) extends from one bead region (20) to the other bead region (20).

4. The tire of claim 3 wherein the second reinforcing ply (34) does not wrap around a bead (55) in each respective bead region.

5. The tire of at least one of the previous claims further comprising a first apex (60) and a second apex (70).

6. The tire of claim 3 or 4 wherein the second reinforcing ply (34) is axially outward of the first insert (40) and the second insert (50).

7. The tire of at least one of the previous claims wherein the second reinforcing ply (34) is axially inward of the first apex (60) and the second apex (70).

8. The tire of at least one of the previous claims wherein the first insert (40) has a shore A hardness value measured at 23 degrees C in the range of from 50 to 70 and/or wherein the second insert (50) has a shore A hardness value measured at 23 degrees C in the range of from 60 to 80.

9. The tire of claim 8 wherein the first insert (40) has a shore A hardness value measured at 23 degrees C in the range of from 55 to 65 and/or wherein the second insert (50) has a shore A hardness value measured at 23 degrees C in the range of from 65 to 75.

10. The tire of at least one of the previous claims wherein the first insert (40) has a shore A hardness value measured at 23 degrees C different than the shore A hardness value measured at 23 degrees C of the second insert (50).

11. The tire of at least one of the previous claims wherein the first insert (40) has a shore A hardness value measured at 23 degrees C less than the shore A hardness value measured at 23 degrees C of the second insert (50).

12. The tire of at least one of the previous claims wherein the first insert (40) has the first end located near the crown portion of the tire (10) and the second, radially innermost end located in the range of from 35% to 45% of the section height of the tire (10).

13. The tire of at least one of the previous claims wherein the second insert (50) has the radially outermost end located in a range of from 55% to 65% of the section height of the tire (10) and wherein the second, radially innermost end terminates in abutting contact with the bead (55) or not more than 5 mm radially above the bead (55)

14. The tire of at least one of the previous claims wherein the first insert (40) and the second insert (50) overlap in axial direction over a range of from 10% to 40%, alternately from 20% to 35% of the section height of the tire (10).

15. The tire of at least one of the previous claims wherein the first insert (40) and/or the second insert (50) is an at least approximately crescent shaped sidewall insert.

## Patentansprüche

1. Luftreifen, umfassend eine Karkasse, eine Lauffläche (12), eine radial auswärts von der Karkasse und radial einwärts von der Lauffläche (12) befindliche Gürtelverstärkungsstruktur (14), ein Paar Seitenwände (18), wobei jede Seitenwand (18) sich radial auswärts von einem eines Paars von Wulstbereichen (20) befindet, einen ersten Einsatz (40) und zweiten Einsatz (50), wobei die Karkasse weiter eine sich unter der Lauffläche (12) erstreckende erste Verstärkungslage (30) umfasst, wobei der erste Einsatz (40) zwischen einer Innenisolierung (24) und der ersten Verstärkungslage (30) angeordnet ist, und wobei der zweite Einsatz (50) axial auswärts von der ersten Verstärkungslage (30) angeordnet ist, **dadurch gekennzeichnet, dass** der erste Einsatz (40) ein erstes, nächst dem Zenitteil des Reifens (10) befindliches Ende und ein zweites, radial innerstes, im Bereich von 25% bis 50% der Querschnittshöhe des Reifens (10) befindliches Ende aufweist, und dass der zweite Einsatz (50) ein in einem Bereich von 50% bis 75% der Querschnittshöhe des Reifens (10) befindliches radial äußerstes Ende und ein zweites, radial innerstes Ende, das in Stoßkontakt mit dem Wulst (55) oder nicht mehr als 10 mm radial über dem Wulst (55) endet, aufweist, wobei die Querschnittshöhe in radialer Richtung von dem radial innersten Punkt des Wulstbereichs (20) des Reifens (10) bis zu dem radial äußersten Punkt der Lauffläche (12) des Reifens (10) gemessen ist.

2. Reifen nach Anspruch 1, wobei die erste Verstärkungslage (30) um einen Wulst (55) in jedem jeweiligen Wulstbereich (20) herum verankert ist.

3. Reifen nach Anspruch 1 oder 2, wobei eine zweite Verstärkungslage (34) sich von einem Wulstbereich (20) zu dem anderen Wulstbereich (20) erstreckt.

4. Reifen nach Anspruch 3, wobei die zweite Verstärkungslage (34) nicht um einen Wulst (55) in jedem jeweiligen Wulstbereich herumgeschlagen ist.

5. Reifen nach mindestens einem der vorgenannten Ansprüche, weiter ein erstes Kernprofil (60) und ein zweites Kernprofil (70) umfassend.

6. Reifen nach Anspruch 3 oder 4, wobei die zweite Verstärkungslage (34) sich axial auswärts von dem ersten Einsatz (40) und dem zweiten Einsatz (50) befindet.

7. Reifen nach mindestens einem der vorgenannten Ansprüche, wobei die zweite Verstärkungslage (34) sich axial einwärts von dem ersten Kernprofil (60) und dem zweiten Kernprofil (70) befindet.

8. Reifen nach mindestens einem der vorgenannten Ansprüche, wobei der erste Einsatz (40) einen Shore A-Härtewert, gemessen bei 23 Grad Celsius, im Bereich von 50 bis 70 aufweist und/oder wobei der zweite Einsatz (50) einen Shore A-Härtewert, gemessen bei 23 Grad Celsius, im Bereich von 60 bis 80 aufweist.

9. Reifen nach Anspruch 8, wobei der erste Einsatz (40) einen Shore A-Härtewert, gemessen bei 23 Grad Celsius, im Bereich von 55 bis 65 aufweist und/oder wobei der zweite Einsatz (50) einen Shore A-Härtewert, gemessen bei 23 Grad Celsius, im Bereich von 65 bis 75 aufweist.

10. Reifen nach mindestens einem der vorgenannten Ansprüche, wobei der erste Einsatz (40) einen Shore A-Härtewert, gemessen bei 23 Grad Celsius, aufweist, der verschieden von dem Shore A-Härtewert, gemessen bei 23 Grad Celsius, des zweiten Einsatzes (50) ist.

11. Reifen nach mindestens einem der vorgenannten Ansprüche, wobei der erste Einsatz (40) einen Shore A-Härtewert, gemessen bei 23 Grad Celsius, aufweist, der weniger als der Shore A-Härtewert, gemessen bei 23 Grad Celsius, des zweiten Einsatzes (50) beträgt.

12. Reifen nach mindestens einem der vorgenannten Ansprüche, wobei das erste Ende des ersten Einsatzes (40) sich nächst dem Zenitbereich des Reifens (10) befindet und das zweite, radial innerste Ende sich im Bereich von 35% bis 45% der Querschnittshöhe des Reifens (10) befindet.

13. Reifen nach mindestens einem der vorgenannten Ansprüche, wobei das radial äußerste Ende des zweiten Einsatzes (50) sich im Bereich von 55% bis 65% der Querschnittshöhe des Reifens (10) befindet und wobei das zweite, radial innerste Ende in Stoßkontakt mit dem Wulst (55) oder nicht mehr als 5 mm radial über dem Wulst (55) endet.

14. Reifen nach mindestens einem der vorgenannten Ansprüche, wobei der erste Einsatz (40) und der zweite Einsatz (50) sich in axialer Richtung über einen Bereich von 10% bis 40%, alternativ von 20% bis 35%, der Querschnittshöhe des Reifens (10) überlappen.

15. Reifen nach mindestens einem der vorgenannten Ansprüche, wobei der erste Einsatz (40) und/oder der zweite Einsatz (50) ein mindestens annähernd sichelförmiger Seitenwandeinsatz ist.

## Revendications

1. Bandage pneumatique comprenant une carcasse, une bande de roulement (12), une structure de renforcement de ceinture (14) disposée à l'extérieur en direction radiale de la carcasse et à l'intérieur en direction radiale de la bande de roulement (12), chaque flanc (18) étant disposé à l'extérieur en direction radiale d'une des paires de zones de talons (20), un premier insert (40) et un deuxième insert (50), la carcasse englobant en outre une première nappe de renforcement (30) s'étendant en dessous de la bande de roulement (12), dans lequel le premier insert (40) est disposé entre un calandrage intérieur (24) et la première nappe de renforcement (30) et dans lequel le deuxième insert (50) est disposé à l'extérieur en direction axiale de la première nappe de renforcement (30), **caractérisé en ce que** le premier insert (40) possède une première extrémité située à proximité de la portion de sommet du bandage pneumatique (10) et une deuxième extrémité la plus interne en direction radiale située dans la plage de 25 % à 50 % de la hauteur de section du bandage pneumatique (10), et **en ce que** le deuxième insert (50) possède une extrémité la plus externe en direction radiale située dans la plage de 50 % à 75 % de la hauteur de section du bandage pneumatique (10) et une deuxième extrémité la plus interne en direction radiale qui se termine en contact bout-à-bout avec le talon (55) ou à une distance qui n'est pas supérieure à 10 mm en direction radiale au-dessus du talon (55), dans lequel la hauteur de section est mesurée en direction radiale à partir du point le plus interne en direction radiale de la zone de talon (20) du bandage pneumatique (10) jusqu'au point le plus externe en direction radiale de la bande de roulement (12) du bandage pneumatique (10).

2. Bandage pneumatique selon la revendication 1, dans lequel la première nappe de renforcement (30) est ancrée autour d'un talon (55) dans chaque zone de talon respective (20).

3. Bandage pneumatique selon la revendication 1 ou 2, dans lequel une deuxième nappe de renforcement (34) s'étend depuis une zone de talon (20) jusqu'à l'autre zone de talon (20).

4. Bandage pneumatique selon la revendication 3, dans lequel la deuxième nappe de renforcement (34) ne vient pas s'enrouler autour d'un talon (55) dans chaque zone de talon respective.

5. Bandage pneumatique selon au moins une des revendications précédentes, comprenant en outre un premier bourrage sur tringle (60) et un deuxième bourrage sur tringle (70).

6. Bandage pneumatique selon la revendication 3 ou 4, dans lequel la deuxième nappe de renforcement (34) est située à l'extérieur en direction axiale du premier insert (40) et du deuxième insert (50).

7. Bandage pneumatique selon au moins une des revendications précédentes, dans lequel la deuxième nappe de renforcement (34) est située à l'intérieur en direction axiale du premier bourrage sur tringle (60) et du deuxième bourrage sur tringle (70).

8. Bandage pneumatique selon au moins une des revendications précédentes, dans lequel le premier insert (40) possède une valeur de dureté Shore A, telle qu'on la mesure à 23 °C, dans la plage de 50 à 70 et/ou dans lequel le deuxième insert (50) possède une valeur de dureté Shore A, telle qu'on la mesure à 23 °C, dans la plage de 60 à 80.

9. Bandage pneumatique selon la revendication 8, dans lequel dans lequel le premier insert (40) possède une valeur de dureté Shore A, telle qu'on la mesure à 23 °C, dans la plage de 55 à 65 et/ou dans lequel le deuxième insert (50) possède une valeur de dureté Shore A, telle qu'on la mesure à 23 °C, dans la plage de 65 à 75.

10. Bandage pneumatique selon au moins une des revendications précédentes, dans lequel le premier insert (40) possède une valeur de dureté Shore A, telle qu'on la mesure à 23 °C, différente de la valeur de dureté Shore A, telle qu'on la mesure à 23 °C, du deuxième insert 50.

11. Bandage pneumatique selon au moins une des revendications précédentes, dans lequel le premier insert (40) possède une valeur de dureté Shore A, telle qu'on la mesure à 23 °C, inférieure à la valeur de dureté Shore A, telle qu'on la mesure à 23 °C, du deuxième insert 50.

12. Bandage pneumatique selon au moins une des revendications précédentes, dans lequel le premier insert (40) possède une première extrémité située à proximité de la portion de sommet du bandage pneumatique (10) et une deuxième extrémité la plus interne en direction radiale dans la plage de 35 % à 45 % de la hauteur de section du bandage pneumatique (10).

13. Bandage pneumatique selon au moins une des revendications précédentes, dans lequel le deuxième insert (50) possède une extrémité la plus externe en direction radiale située dans la plage de 55 % à 65 % de la hauteur de section du bandage pneumatique et dans lequel la deuxième extrémité la plus interne en direction radiale se termine en contact bout-à-bout avec le talon (55) ou à une distance qui n'est pas supérieure à 5 mm en direction radiale au-dessus du talon (55).

14. Bandage pneumatique selon au moins une des revendications précédentes, dans lequel le premier insert (40) et le deuxième insert (50) se chevauchent en direction axiale dans la plage de 10 % à 40 %, en variante de 20 % à 30 % de la hauteur de section du bandage pneumatique (10).

15. Bandage pneumatique selon au moins une des revendications précédentes, dans lequel le premier insert (40) et/ou le deuxième insert (50) représentent un/des insert(s) de flancs qui possèdent la configuration approximative d'un croissant.
